# EUROPEAN PATENT APPLICATION

(11) **EP 4 286 627 A1**
(43) Date of publication of application: **06.12.2023**
(21) Application number: 22176032.5
(22) Date of filing: 30.05.2022
(51) Int. Cl.: E04H 15/06, B60P 3/34

(54) **TAILGATE TENT**

(71) Applicant: Thule NV, 8930 Menen (BE)
(72) Inventor: HEGGE, Franciscus Constance Jozef, B-3030 Hamont Achel (BE)
(74) Representative: Wallentin, Lars

(57) **Abstract**

The present invention relates to a tent (20) configured to be mounted to a rear of a vehicle (10), such as a van, truck or station wagon. The vehicle (10) comprises a tailgate (12) hingedly connected to a top of the vehicle (10). The tailgate (12) is adjustable between an open position unblocking a rear access opening to a vehicle (10) interior space and a closed position. The tent (20) comprises a canopy (22). The tent (20) is adjustable into a deployed configuration in which the canopy (22) provides a tent (20) interior living space. The tent (20) interior space is connected to the vehicle (10) interior space when the tent (20) is in the deployed configuration, the tailgate (12) is in the open position and the tent (20) is mounted to the rear of the vehicle (10). The invention further relates to a method of using such a tent (20).

## Description

### TECHNICAL FIELD

The present invention relates to a tent configured to be mounted to a rear of a vehicle, such as a van, truck or station wagon. The present invention further relates to a method for using such a tent.

### PRIOR ART

It has become increasingly common for families and people doing a lot of outdoor sports to spend their free time living in their vehicle. For example, a lot of people do not use a mobile home anymore to go camping but rather live in their van or station wagon, in particular for single overnight trips or weekends. Such an approach offers the advantage of not having to own a mobile home in addition to a rather regular vehicle. Further, mobile homes are rather uncomfortable to drive due to their limited maximum speed, susceptibility to sidewinds and general large outer dimensions.

However, the living space offered by vehicles such as vans, trucks and station wagons may be rather limited. In particular, a height of the vehicle may be insufficient for a person to stand upright in its interior space. This may make it difficult for occupants to change their clothing. Further, cooking and eating in the inside of regular vehicles may be undesirable due to potential soiling and fire risks. The fabrics usually covering the interior of vehicles may be difficult to clean.

Hence, it is desirable to provide additional living space for the occupants once they have arrived at their destination. For that purpose, a tent may be carried in the vehicle which can be erected next to the vehicle or even connected to the vehicle. However, such tents may be cumbersome to use. In particular, if changing the locations often, disassembling the tent and setting the tent up at the new location may take a lot of time and thus discourage the occupants from actually using the tent. Time spent on setting up the tent and taking the tent down may be a major offset to the advantages of using a regular motor vehicle in comparison to a mobile home, as it may limit the flexibility and comfort of using a regular motor vehicle over a mobile home.

### SUMMARY OF THE INVENTION

A first aspect relates to a tent configured to be mounted to a rear of a vehicle. The vehicle has a tailgate hingedly connected to a top of the vehicle. The tailgate is adjustable between an open position unblocking a rear access opening to a vehicle interior space and a closed position. In the open position, the tailgate may substantially extend in a horizontal direction if the vehicle is standing on a level ground. In the open position, the tailgate may essentially form an extension of the roof of the vehicle. For example, the tailgate may be pivoted upward to adjust the tailgate from its closed position to its open position. In the closed position, the tailgate may block access to the vehicle interior space from the rear. In the closed position, the tailgate may substantially extend in a vertical direction if the vehicle is standing on a level ground. The tailgate may comprise a window, for example formed by a glass sheet. The window may be arranged in an upper section of the tailgate, allowing a driver of the vehicle rear vision. The vehicle may be configured as a motor vehicle. The vehicle may be a vehicle having a larger interior space as compared to regular passenger cars. Examples of the vehicle are a van, truck or station wagon. The vehicle interior space may be a cargo space and/or a passenger space. Typically, a vehicle with a tailgate hingedly connected to its top may have no permanent separation between its passenger space and cargo space. For example, in case of a van, a person may access from the rear and move up to the driver seat.

The tent comprises a canopy. The canopy may be formed from a textile and/or may be configured as a fabric element. The canopy may comprise windows and/or access openings. For example, the canopy may comprise several flaps that can be folded away to provide doors and/or openable windows. In addition or alternatively, the windows may be provided by transparent canopy sections. A tent may be a form of temporary shelter, in particular having some form of non-rigid walls that protect a tent interior living space from the elements and/or from being visible for persons standing outside the tent. The walls of the tent may be formed by the canopy. The canopy may form sidewalls of the tent and/or an optional floor of the tent and/or an optional roof of the tent.

The tent is adjustable into a deployed configuration in which the canopy provides a tent interior living space. The tent interior space may be high enough to allow a person to stand upright. For example, to adjust the tent into its deployed configuration, the canopy may be unfolded and/or respective tent poles erected and attached. To adjust the tent into its deployed configuration, the canopy and/or tent poles may be attached to the vehicle. Attaching the tent to the motor vehicle may facilitate deploying the tent since the vehicle may provide strong structural support for the tent. The tent may be configured to allow a person of usual height to stand upright in its interior in the deployed configuration. The tent may be configured to rest partially on the ground next to the car when deployed, for example with the floor section of the canopy laying flat on the ground. The tent may be configured to extend upwards to the underside of the tailgate in its open position, for example attached at its top to the tailgate, in particular with its roof and/or tent poles.

The tent interior space is connected to the vehicle interior space when the tent is in the deployed configuration, the tailgate is in the open position and the tent is mounted to the rear of the vehicle. The tent may thus provide an expansion of the vehicle interior space. For example, the tent and the vehicle may form a common interior space in this case. This allows a user to use the tent interior living space and the vehicle interior space as one common space. Such a design may be very comfortable to the user as it may be understood as providing a seamlessly increased vehicle living space. The tent may be configured to at least partially seal with a bodywork of the vehicle around the access opening unblocked by the tailgate in its open position. The tent may thus also protect the vehicle interior space from the elements, despite the tailgate being in the open position. For example, the tent may be connected in an essentially gap-free manner to the rear of the vehicle when the tent is in the deployed configuration, the tailgate is in the open position and the tent is mounted to the rear of the vehicle.

According to an embodiment of the tent, the tent, in particular the whole canopy, is arranged underneath the tailgate when the tent is in the deployed configuration, the tailgate is in the open position and the tent is mounted to the rear of the vehicle. The tailgate may thus provide additional protection for the canopy, for example from hail. The whole canopy being arranged underneath the tailgate may be understood as no section of the canopy extending beyond the tailgate in the vertical direction. Additionally, the canopy may not or only slightly extend beyond the tailgate in the horizontal direction. For example, a floor plan of the deployed canopy may substantially correspond to a horizontal projection of the tailgate in its open position. For example, the floor of the tent may substantially have the same shape and form as a flat side of the tailgate and/or as the access opening blockable by the tailgate. Deploying the tent mounted to the vehicle thus does not need additional space besides the parking space usually required for the vehicle or only minimal additional parking space for deployment, in particular if the usual parking space is considered as including sufficient space to fully open the tailgate.

According to an embodiment of the tent, the tent is configured as an at least partially self-supporting tent. A partially self-supporting tent may comprise some structural elements, such as poles or a frame, that hold the canopy in an at least partially deployed state. This may facilitate deployment of the tent. For example, in the partially deployed state, attachment points of the tent may be easily accessible and/or visible. Further, it may be possible to move the tent around without the tent unwantedly collapsing. To fully support the tent, attachment to an additional structure, in particular the vehicle, may be required. This may render the tent very lightweight while having very strong support in the deployed configuration when mounted to the vehicle. The tent may also be configured as a fully self-supporting tent. The fully self-supporting tent does not require attachment to additional structures, such as a tree or the vehicle, to remain in its deployed configuration. For example, a fully self-supporting tent may also be used independently of the vehicle. This may allow to keep the tent deployed at a camping location while using the vehicle to drive around, for example for grocery shopping.

The tent may be configured to support the tailgate in its open position when the tent is in the deployed configuration and the tent is mounted to the rear of the vehicle. For example, the tent may be configured to prevent adjusting the tailgate into its closed position when in the deployed configuration and mounted to the vehicle. The support of the tailgate by the tent may prevent the tailgate from pivoting towards the closed position, which could damage the tent and/or objects arranged in the tent interior living space. Moreover, the tent supporting the tailgate in the open position may prevent unwanted closing the tailgate with a remote and/or when handling parts of the tent attached to the tailgate. For example, poles of the tent may brace against the tailgate from below. Alternatively or additionally, a tent fixation device could block the hinges of the tailgate, for example by insertion of a wedge or some other element.

The tent may be free of a fixation to the ground, such as by tent pegs, when in the deployed configuration. For example, any parts of the tent, such as poles and/or the canopy, may simply rest on the ground with the tent in the deployed configuration. With the tent being configured as having no ground fixation, erecting and taking down the tent is particular fast and easy. Moving of the tent on the ground can be avoided by other means to provide a very stable tent. For example, some corners of the floor of the tent may be fixed to the rear of the vehicle. As another example, tent poles may be sandwiched between the tailgate and the ground, thus preventing their movement. For that purpose, the poles may have a length slightly longer than the distance between the ground and the tailgate. Further, the tent poles may be at least partially elastic, for example due to a spring. The poles are thus tensioned against the ground and/or tailgate, preventing their movement.

According to an embodiment of the tent, the tent is configured for removable mounting to the vehicle. The tent may thus be unmounted from the rear of the vehicle, for example for storage and/or when the user wishes to move the vehicle while leaving the tent. For example, the tent, in particular its canopy, may be fixed to the vehicle with quick release elements only, such as buckles, buttons or hooks. Similarly, any tent poles may also only be fixed to the vehicle, in particular its tailgate, with such fast release elements. Alternatively, the tent poles may also only engage the tailgate in a non-fixed manner, such as with a friction fit or form fitting elements. Such an engagement may be configured to automatically disengage from the tailgate when disassembling the tent and/or when adjusting the tent from the deployed configuration into another configuration.

According to an embodiment of the tent, the mounting of the tent to the vehicle requires no vehicle modification and permanent fixation, such as gluing, drilling or screw fixation. Any such modification may always have the risk of damaging the vehicle and/or increasing the risk of wear and tear, for example by water ingress through a drilled hole in the bodywork. Further, such permanent modifications require some level of craftiness and/or tools which might not be available to every user. Further, the tent can thus easily be used with different vehicles on short notice.

According to an embodiment of the tent, all fixation means of the tent are arranged below a top of the vehicle. In particular, no fixation means may extend into engagement with a top side of the tailgate in the open position. For example, any straps, clamps or other engagement elements do not need to extend around a top side of the vehicle roof and the top side of the tailgate in the open position. This facilitates mounting the tent since a lot of users may be too small to reach the top of the vehicle, in particular in case of high vans and trucks. Further, such a configuration of the tent reduces the risk of scratching an exterior of the bodywork of the vehicle with parts of the tent.

According to an embodiment of the tent, the tent comprises at least one tent pole. A tent pole may be formed from metal or plastic. A tent pole may be substantially rigid. A tent pole may have a substantially bar shaped form. A tent pole may comprise several pole elements. For example, the pole elements may be configured for disengagement and/or folding to allow space saving storage with a shorter length. The pole elements may also be moveable relative to each, for example for length adjustment. The canopy may be configured to be attached to the tent pole, in particular with a bottom corner and/or top corner. The tent pole may support the canopy, in particular holding the canopy in a spanned arrangement that provides the tent interior living space, for example either alone or together with the vehicle, in particular its tailgate and/or bodywork. The tent poles may provide additional stiffness and structural support to the tent in the deployed configuration. The tent may comprise more than one tent pole, such as a total of two or four tent poles. Respective features and configurations described for the at least one tent pole in the following may equally applied to such additional tent poles, if applicable.

The tent may comprise two poles arranged at corners of the tent at a side adjacent the rear of the vehicle when the tent is in the deployed configuration and mounted to the rear of the vehicle. Alternatively, the corners of the tent arranged adjacent the vehicle when the tent is in the deployed configuration and mounted to the rear of the vehicle, in particular such corners of the canopy, may be fixed to the vehicle and/or the ground to support the tent. Additionally or alternatively, the tent may comprise two poles arranged at corners of the tent at a side opposite the rear of the vehicle when the tent is in the deployed configuration and mounted to the rear of the vehicle. These two tent poles may be particular suitable to support the tailgate in the open position. Alternatively, the corners of the tent arranged opposite the rear of the vehicle when the tent is in the deployed configuration and mounted to the rear of the vehicle, in particular such corners of the canopy, may be fixed to the vehicle and/or the ground to support the tent.

According to an embodiment of the tent, the at least one tent pole is configured to stand freely on the ground. As such, the tent pole does not require to be fixed to the ground and/or to penetrate the ground in order to erect the tent. For example, the at least one tent pole may have a base element arranged to one end that improves the hold on the ground and/or prevents the pole from penetrating soft soil. The base element may, for example, be configured as a flat plate.

According to an embodiment of the tent, the at least one tent pole is configured to be arranged underneath the tailgate in its open position. For example, at least an end of the tent pole arranged adjacent or in contact with the tailgate when the tent is in the deployed configuration and mounted to the rear of the vehicle may be arranged underneath the tailgate. This end may be configured as the upper end of the tent pole. An opposite, in particular lower, end of the tent pole may be arranged outside of a projection of the tailgate in the open position. For example, the tent pole may be inclined outward when starting from the tailgate facing upper end. Such an arrangement may improve tent stability. Alternatively, the tent pole may be arranged vertical or even inclined inward so as not to extend beyond the circumference of the tailgate in its open position. Such a configuration requires a very small parking space.

According to an embodiment of the tent, the at least one tent pole is configured to support the tailgate in its open position when the tent is in the deployed configuration and mounted to the rear of the vehicle. For example, the tent pole may be configured to engage the tailgate from below when the tailgate is in its open position and when the tent is in the deployed configuration and mounted to the rear of the vehicle. The tent pole may thus block adjustment of the tailgate toward the closed position. Such a configuration facilitates use of the tent since the user may need to erect the tent poles for deploying the tent and no additional step for fixing the tailgate in its open position may thus be required. Further, by engaging the tailgate with the tent pole, the tent pole may be kept upright as well. The tent may therefore not need any bars connecting different tent poles, such as a cross bar at the roof. The tent may be free of any bars substantially extending in the horizontal direction when the tent is in the deployed configuration.

According to an embodiment of the tent, the at least one tent pole is configured to engage the tailgate, in particular from underneath, when the tent is in the deployed configuration and mounted to the rear of the vehicle.

According to an embodiment of the tent, when adjusting the tent into its deployed configuration, the at least one tent pole can first be engaged to the canopy and then to the tailgate. For example, the canopy may be attached, in particular removably attached, to a top end of the tent pole when the tent is in the deployed configuration, in particular with a corner and/or by quick release elements, such as buckles, buttons or hooks, and/or via a strap, in particular a length adjustable strap. Attaching first the canopy to the tent pole may facilitate assembly of the tent since an upper end may be difficult to reach once the tent pole is attached to the tailgate and thus standing upright. Alternatively or additionally, the at least one tent pole can first be engaged to the tailgate and then to the canopy. Attaching first the tent pole to the tailgate may facilitate assembly of the tent since the tailgate may thus already be supported in the open position and the tent pole may already be kept in its upright erected position, allowing a user to use both hands for handling the canopy.

According to an embodiment of the tent, the at least one tent pole is configured for a length adjustment, in particular a telescopic length adjustment. For example, the tent pole may comprise two or more pole elements telescopically moveable to each other. The length adjustment allows adaptation of the tent to vehicles with different heights. Further, length adjustment may allow tightening of the attached canopy for a smooth outer tent surface.

According to an embodiment of the tent, the at least one tent pole is configured for length self-adjustment when the tent is in the deployed configuration and mounted to the rear of the vehicle to compensate vehicle suspension movement. When people are moving in the interior space of the vehicle, the rear of the vehicle may move upward and downward. Moreover, different loads may change the effective height of the vehicle. Without the compensation, the tailgate could otherwise damage or even break the tent pole, in particular if the tent pole engages the tailgate. For example, the tent pole may be configured with enough flexibility to provide self-adjustment of length similar to suspension movement of the vehicle when standing still.

According to an embodiment of the tent, the at least one tent pole comprises a spring element for length self-adjustment. Such a spring element may provide a reliable and large amount of length self-adjustment. In particular, the spring element may moveably connect two pole elements of the at least one tent pole with each other. Such a configuration can be combined with the telescopic length adjustability of the tent pole, which may be provided to adapt the tent pole to vehicles with different heights. Overall, the tent pole may thus remain thin and inexpensive.

According to an embodiment of the tent, the tent comprises at least one attachment element configured to engage the tailgate of the vehicle when the tent is in the deployed configuration and the tent is mounted to the rear of the vehicle. For example, the attachment element may be shaped to engage the tailgate just with friction. Alternatively, the attachment element may be a clamp or strap that can be tightened around parts of the tailgate. Other attachment elements may be used as well, such as suction cups, hooks or attachment elements configured for engaging a load securing anchor element in the tailgate. The attachment element may be releasably fixed to the tent pole and/or canopy so that it may be exchanged depending on the type of vehicle. The attachment element may thus form an exchangeable adapter that allows secure and easy tent mounting to different vehicles.

A further aspect of the invention also relates to a tent system with a tent according to the first aspect, wherein the system comprises a first attachment element and a second attachment element. The first attachment element may be configured for engaging a tailgate of a first vehicle and the second attachment element may be configured for engaging a tailgate of a second vehicle with a tailgate different to the first vehicle.

According to an embodiment of the tent, the at least one attachment element is fixed to a top end of the at least one tent pole. For example, the attachment element may be removably or permanently attached to the top end of the tent pole. Alternatively or additionally, the at least one attachment element is fixed to a top end of the canopy, in particular a top corner of the canopy. For example, the attachment element may be removably or permanently attached to the canopy.

According to an embodiment of the tent, the at least one attachment element is configured as a shell for engaging the tailgate of the vehicle, in particular an edge and/or corner of the tailgate. The shell may be formed from a plastic or metal material. The shell may facilitate engagement. In particular, the user may only be required to place the shell underneath the tailgate into contact with the tailgate for fixing the tent pole and/or canopy to the tailgate. If the shell engages a corner of the tailgate, the engagement may withstand wind from different directions particular well.

According to an embodiment of the tent, the shell is formed correspondingly to a section of the tailgate. For example, a shape of the shell may correspond to a shape of an edge or corner of the tailgate. Such a configuration provides a very secure engagement that may withstand high loads.

According to an embodiment of the tent, the shell is configured for adaptation to a section of the tailgate. For example, the shell may be formed at least partially from a soft material that allows adaptation to variations in size and shape of the tailgate. Alternatively or additionally, the shell may be configured for shape adjustment to improve engagement with the tailgate.

According to an embodiment of the tent, a tailgate engaging side of the shell is formed by a compliant material, in particular foam or rubber. Such a configuration may protect the tailgate from damage due to engagement with the shell. Further, such a configuration may increase friction, resulting in a more secure engagement. For example, the compliant material may be soft and/or elastic.

According to an embodiment of the tent, the shell comprises a shell element, in particular a plastic shell element. The shell element may be a rigid element. The shell element may absorb loads from the tailgate on the tent and vice-versa. The shell element may facilitate handling of the attachment element during mounting of the tent to the vehicle. The shell element may be configured as a plastic shell element. A plastic shell element may be robust, light and inexpensive.

According to an embodiment of the tent, the at least one attachment element engages the tailgate from below when the tent is in the deployed configuration and the tent is mounted to the rear of the vehicle. The tent may be configured to only engage the tailgate with attachment elements and/or only from below.

According to an embodiment of the tent, the at least one attachment element is free of an engagement with a top side of the tailgate when the tent is in the deployed configuration and the tent is mounted to the rear of the vehicle. In particular the tent may be free of any attachment elements configured for an engagement with a top side of the tailgate when the tent is in the deployed configuration and the tent is mounted to the rear of the vehicle. Engagement of the attachment elements to the tailgate may be particular easy in this case. Further, such a configuration may minimize a risk of scratching the tailgate with the tent, in particular an exterior side of the tailgate.

According to an embodiment of the tent, the tent is configured for fixation to the top of the vehicle, in particular from below. Such a fixation may easily keep the tent in the deployed configuration. For example, the tent may be fixed to an interior side of the vehicle roof, a top section of the bodywork of the vehicle surrounding the rear access opening of the vehicle and/or the tailgate. The tailgate may form part of the top of the vehicle in its open position. For example, the tent may be configured for fixation to hinges of the tailgate and/or load securing anchor elements at the top of the vehicle. The hinges of the tailgate may be configured to pivotably attach the tailgate to the bodywork of the vehicle, in particular at its top. The load securing anchor elements may be sections of the vehicle configured to be very load resistant. For example, the load securing anchor elements may be configured to strap down cargo in the interior space of the vehicle. For example, the load securing anchor elements may be configured as load securing eyelets or hooks at the interior ceiling or at corners of the vehicle bodywork or at the tailgate, in particular at corners close to the hinges of the tailgate. The load securing anchor elements may be covered the tailgate in the closed position and uncovered in the open position. The load securing anchor elements may be provided specifically for mounting the tent or may be general load securing means for the interior space of the vehicle. Such fixations may provide a sturdy and reliable fixation for the tent so that it might withstand adverse weather conditions, in particular strong wind.

According to an embodiment of the tent, the tent comprises a fixation device for attaching the tent, in particular its canopy, to a hinge of the tailgate and/or the load securing anchor element. For example, the fixation device may be configured as a hinge fixation device. The fixation device may be configured to attach the canopy and/or at least one of its tent poles to the hinge of the tailgate and/or the load securing anchor element. The fixation device may be configured for quick release, for example comprising a buckle or snap-connector. The fixation device may be configured to be releasably attached to tent, in particular the canopy and/or at least one of the tent poles. For example, the fixation device may be attached to the canopy by means of a buckle or snap-connector. This may allow disconnecting the canopy and/or tent from the vehicle while the fixation device may remain attached. For example, a user may first attach the fixation device to the vehicle and then attach other parts of the tent to the fixation device. This may facilitate adjusting the tent in the deployed configuration and mounting to the vehicle.

According to an embodiment of the tent, the fixation device comprises a strap for engaging a hinge of the tailgate. For example, the strap may be formed from a textile. The strap may facilitate engaging the hinge and may be very cost-effective. The strap may be configured to wrap around the hinge and/or to be threaded through the hinge of the tailgate. The strap may be configured to allow tightening of the fixation device, for example by adjusting the length of the strap. This may allow adaptation to different vehicle sizes and/or to tighten the canopy with the fixation device.

According to an embodiment of the tent, wherein the fixation device is configured to keep the tent attached to the hinge of the tailgate and/or the load securing anchor element when the tailgate is in its closed position. For example, a strap in the hinge may remain in place even when the tailgate is adjusted into its closed position. This may allow to keep the fixation device fixed to the vehicle, in particular if the rest of the tent is detachable from the fixation device. Attaching and detaching the fixation device when mounting and unmounting the tent may thus be avoided, which may be the most cumbersome part of the mounting and unmounting. Further, the fixation device may thus be configured to keep the tent attached to the vehicle even when the tent is not in its deployed configuration. For example, the tent may be adjusted into a transport configuration in which the tent is still mounted to the vehicle but does not provide a tent interior living space, instead having a size that may allow transportation in the vehicle interior space.

According to an embodiment of the tent, the canopy and/or the at least one tent pole is detachable from the fixation device, wherein the fixation device may remain attached to the vehicle when the canopy is detached. For example, the canopy and/or the at least one tent pole may be detachably attached to the fixation device, in particular its strap, by a buckle, button, hook or some other form of device configured for quick release.

According to an embodiment of the tent, the tent is adjustable into a transport configuration in which the canopy provides no tent interior living space. For example, the canopy may be folded and/or rolled together in the transport configuration. Alternatively or additionally, the tent poles may be detached and/or collapsed in the transport configuration. The transport configuration may require less space than the deployed configuration. For example, the transport configuration may be sufficiently small enough to allow storage of the tent in the vehicle interior space. The tent is configured to remain mounted to the vehicle in the transport configuration. For example, the tent may be adjusted into the transport configuration with the tent poles detached from the canopy and/or with the canopy still hanging from the tailgate hinges, in particular by being attached with the fixation device. The tent can thus at least partially remain mounted to the vehicle when not in use for providing an enlarged living space. For example, the tent canopy may remain hanging from the hinges in the vehicle interior space. This may render use of the tent very comfortable. For example, if a user wishes to move the vehicle, the tent can just be adjusted into the transport configuration. Once the user has arrived at a new location, deployment of the tent may be fast and easy, since the canopy is already mounted to the vehicle. For example, the user is then only required to deploy the tent poles, in particular by engaging them to the tailgate and attaching them to the canopy, in order to deploy the tent and provide the extra living space.

According to an embodiment of the tent, the tent canopy hangs at the rear of the vehicle in the vehicle interior space when the tent is in the transport configuration and when the tent is mounted to the rear of the vehicle. For example, the canopy may hang essentially parallel and/or adjacent to the interior side of the tailgate in its closed position. Such storage of the canopy may not or only slightly inhibit use of the vehicle interior space.

According to an embodiment of the tent, the tent is configured, when in the transport configuration and when mounted to the vehicle, to allow adjustment of the tailgate into its closed position. For example, no tailgate adjustment blocking part of the tent or part that could potentially be damaged by the tailgate, in particular not the canopy, may stick through the rear access opening of the vehicle when the tailgate is still in its open position and the tent is already in the transport configuration.

The tent poles may be separated from the rest of the tent in the transport configuration. For example, the user may simply store tent poles in the back of the vehicle, in particular in a dedicated storage bag. Alternatively, the canopy or some other part of the tent may provide storage for the tent poles with the tent in the transport configuration. For example, the canopy may have loops and/or pockets which are configured to be arranged on the outside when the tent is in the transport configuration and which are configured to secure the tent poles.

According to an embodiment of the tent, the tent canopy comprises a see-through section that at least partially overlaps a rear window of the vehicle when the tent is in the transport configuration and when the tent is mounted to the rear of the vehicle so that a driver has vision through the rear window of the vehicle. The tent in the transport configuration and mounted to the vehicle thus does not inhibit rear vision for the driver or at least still allows some form of rear vision for ease of driving. For example, the see-through section is formed by a transparent section and/or net section of the canopy. In the deployed configuration, the see-through section may act as a window or door of the tent. For example, said window may have a removable see-through section and a net underneath for insect protection.

Alternatively or additionally, the tent is configured to unblock a section that at least partially overlaps a rear window of the vehicle when the tent is in the transport configuration and when the tent is mounted to the rear of the vehicle so that a driver has vision through the rear window of the vehicle. For example, the canopy may comprise a flap that can be folded out of the way to provide rear vision. As another example, the canopy may be folded sideways when hanging from the hinges in the transport configuration, in particular by detaching the canopy from one of the hinges and attaching a section folded onto another section to a remaining hinge to which the canopy is still attached. To unblock a part of the rear window, the canopy may be detached from the fixation device and/or a section of the canopy may be folded out of the way. Unblocking the rear window may provide rear vision also in cases where the see-through section does not overlap with the rear window of the vehicle. Alternatively, no see-through section may be required, which may reduce costs of the canopy.

According to an embodiment of the tent, the tent has a first transport configuration in which a side of the canopy contacting the ground in the deployed configuration, such as an underside of a floor section of the canopy, is facing outward. For example, the canopy may be folded in such a way that a ground-contacting side of the canopy forms an outside section of the tent in the transport configuration. The first transport configuration may facilitate drying and cleaning. Alternatively or additionally, the tent has a second transport configuration in which the side of the canopy contacting the ground in the deployed configuration is facing inward. For example, the canopy may be folded in such a way that the ground-contacting side of the canopy does not form the outside section of the tent in the transport configuration. The second transport configuration may protect the interior of the vehicle from getting wet and/or dirty by preventing contact with the ground contacting section of the canopy. In case the tent can be adjusted into either the first or second transport configuration, the user may choose which configuration currently suits his needs best. For example, with a dry ground contacting section, the user may choose to fold the canopy into the second transport configuration to protect the vehicle interior space from dirt. For example, if the ground contacting section is wet, the user may choose to fold the canopy into the first transport configuration to avoid the canopy getting moldy.

According to an embodiment of the tent, the tent has a third transport configuration in which the canopy essentially blocks the rear access opening of the vehicle closable by the tailgate. Such a configuration may require only a small amount of canopy folding for adjusting the tent into the transport configuration. Storing the tent may thus be very fast and easy. Alternatively or additionally, the tent has a fourth transport configuration in which the rear access opening of the vehicle closable by the tailgate is at least partially unblocked by the canopy. Such a configuration may allow access to the rear access opening, allowing a user to easily enter the vehicle from the back and/or put cargo into the back of the vehicle. For example, the canopy may be folded sideways to unblock part of the rear access opening. Similar to the first and second transport configuration, the tent may be configured to allow a user to choose whether to adjust the tent into the third or fourth transport configuration as serves the needs of the user currently best.

For example, the tent may be configured to provide the third and/or fourth transport configuration in combination with the first and/or second transport configuration. The user may essentially block the rear access opening of the vehicle with the canopy and choose to have the ground contact section of the canopy facing outward or inward. Similarly, the user may adjust the tent into the fourth transport configuration and choose to have the ground contact section of the canopy facing outward or inward.

According to an embodiment of the tent, the tent is adjustable into a storage configuration. In the storage configuration, the tent may have a smaller size than in the transport configuration and/or deployed configuration. For example, the canopy may be rolled together in the storage configuration. The tent may comprise a storage sack in which the canopy and/or tent poles may be stored, in particular in the storage configuration. The storage configuration may be particular useful for storing the tent at home and/or when a maximum of space in the interior of the vehicle is required. For example, no part of the tent may be mounted to the vehicle in the storage configuration.

According to an embodiment of the tent, the tent is configured for fixation to the bodywork of the vehicle, in particular a protruding edge, around the rear access opening of the vehicle closable by the tailgate. The protruding edge of the bodywork may support a seal of the vehicle or may form such a seal. The seal may be configured to prevent water ingress in the vehicle through the rear access opening when the tailgate is in its closed position. Fixing the tent, in particular the canopy, to the bodywork may result in a very stable deployed configuration. In particular, by attaching the canopy to the protruding edge, the canopy may easily and securely seal around the bodywork. The tent may thus provide a very high level of protection against the elements.

According to an embodiment of the tent, the protruding edge may comprise a rubber sealing around the rear access opening of the vehicle. The rubber sealing may contact the tailgate in the closed position, in particular being compressed by the tailgate in the closed position.

According to an embodiment of the tent, the tent comprises an elastic element configured to engage the canopy to the bodywork of the vehicle around the rear access opening of the vehicle closable by the tailgate. Such an elastic element may clasp onto the bodywork, in particular the protruding edge. The elastic element may allow secure engagement to differently shaped bodyworks. Further, bringing the elastic element into engagement with the bodywork may be intuitive and easy for the user. For example, the elastic element may be an elastic rope or may be formed by a section of the canopy. The elastic rope may, for example, be sewn into the canopy. The elastic element may be configured for additional manual tightening and/or length adjustment.

According to an embodiment of the tent, the tent is adjustable into an intermediate configuration in which the canopy is free of contact with a ground around the vehicle when the tent is mounted to the vehicle. For example, the canopy may still partially block the rear access opening of the vehicle in the intermediate configuration, for example extending through the rear access opening of the vehicle. In the intermediate configuration, the tent, in particular the canopy, can prevent closing the tailgate. In the intermediate configuration, the canopy may be folded less, so that cleaning and drying of the canopy is faster and easier. In the intermediate configuration, the tent poles may be particular easy to attach to the canopy, facilitating deployment of the tent.

A second aspect of the invention relates to a method of using the tent according to the first aspect. One step of the method is fixing the tent to the top of the vehicle, in particular to the hinges of the tailgate. Another step of the method is adjusting the tailgate into its closed position while the tent remains attached to the hinges of the tailgate. For example, the user may adjust the tent into one of its transport configurations before closing the tailgate. The use method avoids the need for the user to fully unmount the tent from the vehicle when it is not in use.

The method may comprise a step of opening the tailgate of the vehicle before fixing the tent to the top of the vehicle, in particular to the hinges of the tailgate. The method may comprise a step of adjusting the tent into one of its transport configurations before closing the tailgate. The method may comprise a step of fixing the canopy to the bodywork of the vehicle, in particular a protruding edge, around a rear access opening of the vehicle closable by the tailgate. For example, the step may involve pulling an elastic element of the tent around the bodywork of the vehicle, in particular the protruding edge. The method may comprise a step of attaching the at least one tent pole to the tailgate in its open position, in particular with the at least one attachment element engaging the tailgate from below. Some or all of the tent poles may be attached to the canopy, for example before or after engaging the tailgate with such a tent pole. The method may comprise a step of adjusting a length of the at least one tent pole to a height between an underside of the tailgate in its open position and the ground around the vehicle. For example, the pole length may be adjusted before or after engaging the tailgate. The method may comprise a step of adjusting the tent into its deployed configuration, in particular by erecting the at least one tent pole and/or by attaching top corners of the canopy to the tailgate of the vehicle and/or respective tent poles. For example, two top corners of the canopy may be attached to the bodywork or the vehicle and/or hinges and two other top corners each to a respective tent pole.

Preferred embodiments and expedient developments of one aspect may also constitute preferred embodiments and expedient developments of other aspects. Other features of the present invention will be apparent from consideration of the information contained above as well as in or in combination with the following detailed description, drawings and claims. The present invention is illustrated by way of example, and not by way of limitation, in the figures of the accompanying drawings.

Further embodiments and features may be taken from the following item list:
1. Tent configured to be mounted to a rear of a vehicle, such as a van, truck or station wagon,
   the vehicle having a tailgate hingedly connected to a top of the vehicle,
   wherein the tailgate is adjustable between an open position unblocking a rear access opening to a vehicle interior space and a closed position,
   wherein the tent comprises a canopy and wherein the tent is adjustable into a deployed configuration in which the canopy provides a tent interior living space,
   wherein the tent interior space is connected to the vehicle interior space when the tent is in the deployed configuration, the tailgate is in the open position and the tent is mounted to the rear of the vehicle.
2. Tent according to item 1,
   wherein the tent, in particular the whole canopy, is arranged underneath the tailgate when the tent is in the deployed configuration, the tailgate is in the open position and the tent is mounted to the rear of the vehicle.
3. Tent according to item 1 or 2,
   wherein the tent is configured as an at least partially self-supporting tent, wherein the tent is configured to support the tailgate in its open position when the tent is in the deployed configuration and the tent is mounted to the rear of the vehicle
      and/or
   wherein the tent is free of a fixation to the ground, such as by tent pegs, when in the deployed configuration.
4. Tent according to any one of the previous items,
   wherein the tent is configured for removable mounting to the vehicle
      and/or
   wherein the mounting of the tent to the vehicle requires no vehicle modification and permanent fixation, such as gluing, drilling or screw fixation.
5. Tent according to any one of the previous items,
   wherein all fixation means of the tent are arranged below a top of the vehicle.
6. Tent according to any one of the preceding items,
   wherein the tent comprises at least one tent pole, in particular two poles arranged at corners of the tent at a side adjacent the rear of the vehicle and/or two poles arranged at corners of the tent at a side opposite the rear of the vehicle when the tent is in the deployed configuration and mounted to the rear of the vehicle.
7. Tent according to item 6,
   wherein the at least one tent pole is configured to stand freely on the ground
      and/or
   wherein the at least one tent pole is configured to be arranged underneath the tailgate in its open position.
8. Tent according to item 6 or 7,
   wherein the at least one tent pole is configured to support the tailgate in its open position when the tent is in the deployed configuration and mounted to the rear of the vehicle.
9. Tent according to any one of items 6 to 8,
   wherein the at least one tent pole is configured to engage the tailgate, in particular from underneath, when the tent is in the deployed configuration and mounted to the rear of the vehicle.
10. Tent according to item 9,
   wherein, when adjusting the tent into its deployed configuration, the at least one tent pole can first be engaged to the canopy and then to the tailgate.
11. Tent according to any one of items 6 to 10,
   wherein the at least one tent pole is configured for a length adjustment, in particular a telescopic length adjustment.
12. Tent according to any one of items 6 to 11,
   wherein the at least one tent pole is configured for length self-adjustment when the tent is in the deployed configuration and mounted to the rear of the vehicle to compensate vehicle suspension movement.
13. Tent according to item 12,
   wherein the at least one tent pole comprises a spring element for length self-adjustment, in particular wherein the spring element moveably connects two pole elements of the at least one tent pole with each other.
14. Tent according to any one of the previous items,
   wherein the tent comprises at least one attachment element configured to engage the tailgate of the vehicle when the tent is in the deployed configuration and the tent is mounted to the rear of the vehicle.
15. Tent according to item 14,
   wherein the at least one attachment element is fixed to a top end of the at least one tent pole
      and/or
   wherein the at least one attachment element is fixed to a top end of the canopy.
16. Tent according to item 14 or 15,
   wherein the at least one attachment element is configured as a shell for engaging the tailgate of the vehicle, in particular an edge and/or corner of the tailgate.
17. Tent according to item 16,
   wherein the shell is formed correspondingly to a section of the tailgate
      or
   wherein the shell is configured for adaptation to a section of the tailgate.
18. Tent according to item 16 or 17,
   wherein a tailgate engaging side of the shell is formed by a compliant material, in particular foam or rubber
      and/or
   wherein the shell comprises a shell element, in particular a plastic shell element.
19. Tent according to any one of item 14 to 18,
   wherein the at least one attachment element engages the tailgate from below when the tent is in the deployed configuration and the tent is mounted to the rear of the vehicle
      and/or
   wherein the at least one attachment element is free of an engagement with a top side of the tailgate when the tent is in the deployed configuration and the tent is mounted to the rear of the vehicle, in particular that the tent is free of any attachment elements configured for an engagement with a top side of the tailgate when the tent is in the deployed configuration and the tent is mounted to the rear of the vehicle.
20. Tent according to any one of the previous items,
   wherein the tent is configured for fixation to the top of the vehicle, in particular to hinges of the tailgate and/or load securing anchor elements at the top of the vehicle.
21. Tent according to item 20,
   wherein the tent comprises a fixation device for attaching the tent, in particular its canopy, to a hinge of the tailgate and/or the load securing anchor element.
22. Tent according to item 21,
   wherein the fixation device comprises a strap for engaging a hinge of the tailgate, in particular wherein the strap is configured to wrap around the hinge and/or to be threaded through the hinge of the tailgate.
23. Tent according to item 21 or 22,
   wherein the fixation device is configured to keep the tent attached to the hinge of the tailgate and/or the load securing anchor element when the tailgate is in its closed position.
24. Tent according to any one of previous items 21 to 23,
   wherein the canopy and/or the at least one tent pole is detachable from the fixation device, wherein the fixation device may remain attached to the vehicle when the canopy is detached.
25. Tent according to any one of the previous items,
   wherein the tent is adjustable into a transport configuration in which the canopy provides no tent interior living space and
   wherein the tent is configured to remain mounted to the vehicle in the transport configuration.
26. Tent according to item 25,
   wherein the tent canopy hangs at the rear of the vehicle in the vehicle interior when the tent is in the transport configuration and when the tent is mounted to the rear of the vehicle
      and/or
   wherein the tent is configured, when in the transport configuration and when mounted to the vehicle, to allow adjustment of the tailgate into its closed position.
27. Tent according to item 26,
   wherein the tent canopy comprises a see-through section that at least partially overlaps a rear window of the vehicle when the tent is in the transport configuration and when the tent is mounted to the rear of the vehicle so that a driver has vision through the rear window of the vehicle,
   in particular wherein the see-through section is formed by a transparent section and/or net section of the canopy.
28. Tent according to item 26 or 27,
   wherein the tent is configured to unblock a section that at least partially overlaps a rear window of the vehicle when the tent is in the transport configuration and when the tent is mounted to the rear of the vehicle so that a driver has vision through the rear window of the vehicle,
   in particular wherein the canopy is detached from the fixation device and/or by folding a canopy section out of the way.
29. Tent according to any one of the previous items 25 to 28,
   wherein the tent has a first transport configuration in which a side of the canopy contacting the ground in the deployed configuration, such as an underside of a floor section of the canopy, is facing outward and
   wherein the tent has a second transport configuration in which the side of the canopy contacting the ground in the deployed configuration is facing inward.
30. Tent according to any one of the previous items 25 to 29,
   wherein the tent has a third transport configuration in which the canopy essentially blocks the rear access opening of the vehicle closable by the tailgate
      and
   wherein the tent has a fourth transport configuration in which the rear access opening of the vehicle closable by the tailgate is at least partially unblocked by the canopy.
31. Tent according to any one of the previous items,
   wherein the tent is adjustable into a storage configuration.
32. Tent according to any one of the previous items,
   wherein the tent is configured for fixation to the bodywork of the vehicle, in particular a protruding edge, around the rear access opening of the vehicle closable by the tailgate.
33. Tent according to item 32,
   wherein the protruding edge comprises a rubber sealing around the rear access opening of the vehicle.
34. Tent according to item 32 or 33,
   wherein the canopy is configured to engage the bodywork of the vehicle around the rear access opening closable by the tailgate.
35. Tent according to item 34,
   wherein the tent comprises an elastic element, such as an elastic rope, configured to engage the canopy to the bodywork of the vehicle around the rear access opening of the vehicle closable by the tailgate.
36. Tent according to any one of the previous items,
   wherein the tent is adjustable into an intermediate configuration in which the canopy is free of contact with a ground around the vehicle when the tent is mounted to the vehicle.
37. Method of using the tent according to any one of the previous items,
   the method comprising at least the following steps:
   - Fixing the tent to the top of the vehicle, in particular to the hinges of the tailgate; and
   - Adjusting the tailgate into its closed position while the tent remains attached to the hinges of the tailgate.
38. Method according to item 37,
   the method further comprising at least the following steps:
   - Opening the tailgate of the vehicle before fixing the tent to the top of the vehicle, in particular to the hinges of the tailgate;
   - Adjusting the tent into one of its transport configurations before closing the tailgate;
   - Fixing the canopy to the bodywork of the vehicle, in particular the protruding edge, around the rear access opening of the vehicle closable by the tailgate;
   - Attaching the at least one tent pole to the tailgate in its open position, in particular with the at least one attachment element engaging the tailgate from below;
   - Attaching the at least one attachment element to the top of the at least one tent pole, in particular before attaching the at least one tent pole to the tailgate in its open position;
   - Adjusting a length of the at least one tent pole to a height between an underside of the tailgate in its open position and the ground around the vehicle;

Adjusting the tent into its deployed configuration, in particular by erecting the at least one tent pole and/or by attaching top corners of the canopy to the tailgate of the vehicle and/or respective tent poles.

### BRIEF DESCRIPTION OF FIGURES

- Fig. 1: shows, in a schematic perspective view, a tent in a deployed configuration mounted to a vehicle with a tailgate in an open position.
- Fig. 2: illustrates, in a schematic perspective view, how the tent is fixed to hinges of the tailgate for mounting to the vehicle.
- Fig. 3: illustrates, in a schematic perspective view, how a canopy of the tent is engaged to the bodywork of the vehicle around the rear access opening of the vehicle closable by the tailgate.
- Fig. 4: shows, in a schematic perspective view, the tent in a transport configuration mounted to the vehicle.
- Fig. 5: shows, in schematic perspective view, details of the fixation of the tent to one of the hinges of the tailgate.
- Fig. 6: shows, in a schematic sectional side view, details of the fixation of the tent to one of the hinges of the tailgate.
- Fig. 7: shows, in a schematic side view, details of an engagement of tent poles to the tailgate.

### DETAILED DESCRIPTION OF EMBODIMENTS

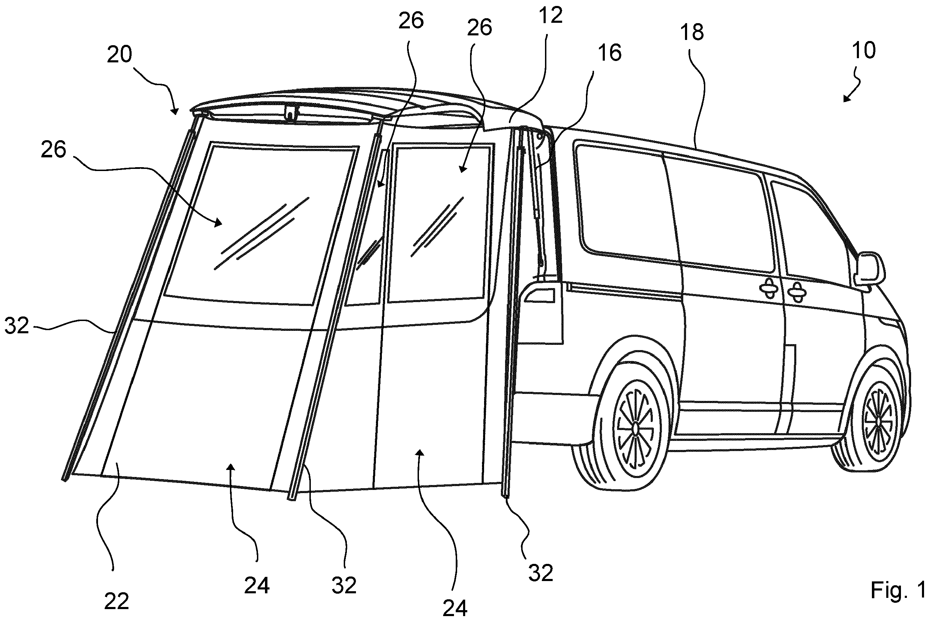

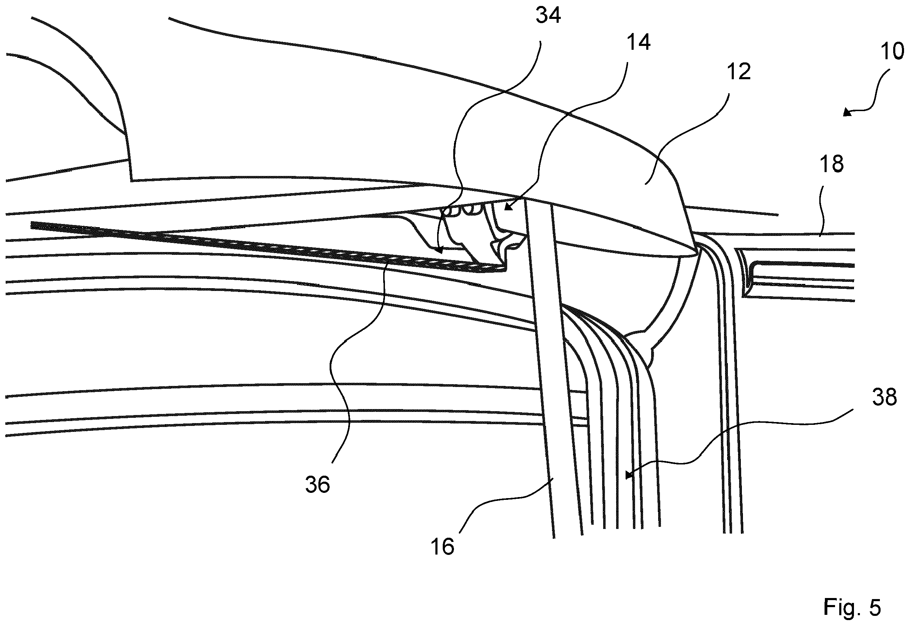

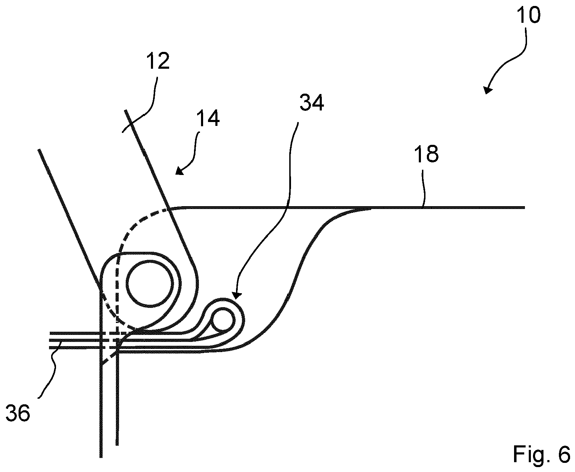

Fig. 1 shows a motor vehicle 10, which is configured as a van and which has a tailgate 12. The tailgate 12 is pivotably mounted to a top of the vehicle 10 by two spaced-apart hinges 14. One of those hinges 14 can be seen in Fig. 5 and Fig. 6. The tailgate 12 can be adjusted from a closed position into an open position by pivoting the tailgate 12 upward. In the open position, the tailgate 12 unblocks a rear access opening of the vehicle 10. Through the unblocked rear access opening users may enter an interior space of the vehicle 10 from the back. In the closed position, the tailgate 12 blocks the rear access opening of the vehicle. The tailgate 12 is support by a gas spring 16 on each side, which connects the tailgate 12 spaced apart from the hinges 14 to a bodywork 18 of the vehicle 10.

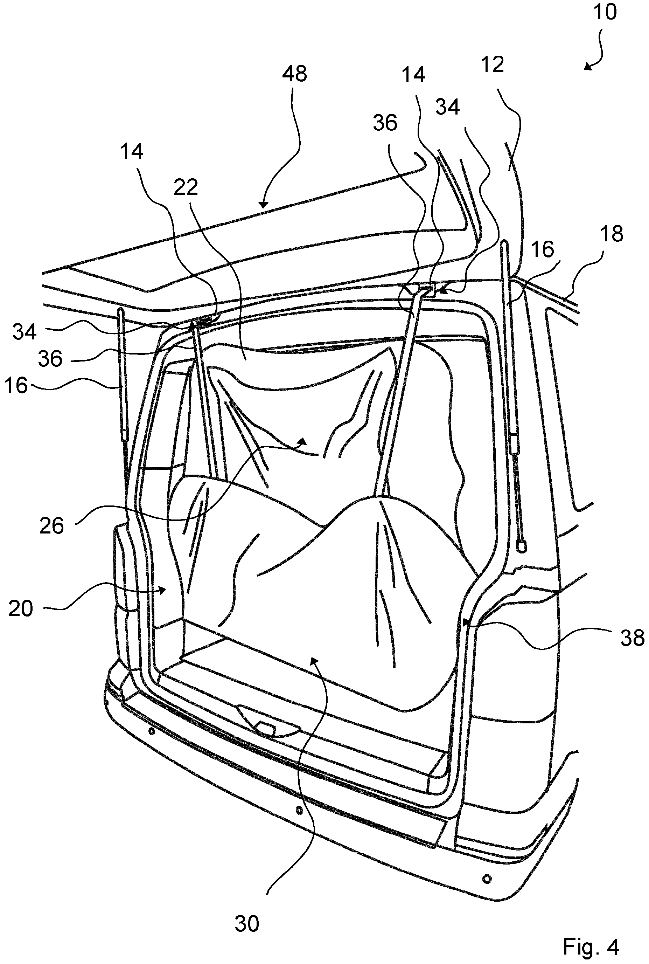

Fig. 1 shows a tent 20. The tent 20 is adjusted into its deployed configuration in Fig. 1. Further, the tent 20 is mounted to the vehicle 10 and the tailgate 12 is in the open position. In the deployed configuration, the tent 20 provides a tent interior living space. The tent interior space is connected to the vehicle interior space, as can be seen in Fig. 1. The tent 20 comprises a canopy 22, which is a flexible element comprising fabric sections. The canopy 22 forms three sidewalls 24 around the rear access opening of the vehicle 10. Further, a section of the canopy 22 may optionally form a floor 30 that contacts the ground, which is shown in Fig. 4. The canopy 22 has multiple see-through sections 26, which form windows in the tent 20. The see-through sections are formed from a transparent plastic and sewn into the fabric sections. One of those windows is aligned with a window 28 of the tailgate so that light might enter into the deployed tent 20 from above. In a particular light configuration, the canopy 22 is free of a roof forming section. The tailgate 12 may instead form a roof for the tent interior living space. In this case, the canopy 22 may, for example, be configured for engaging around a circumferential edge of the tailgate 12 with the canopy 22 to provide full protection from the elements. Optionally, the tent 20 has means of blocking said window and/or other windows, for example a flap made from opaque material configured to cover a window. The tent 20 further comprises a door in each sidewall 24, which may be configured as a flap of fabric that can be rolled to the side and/or to the top.

In the deployed configuration, the canopy 22 is completely arranged underneath the tailgate 12. A rear side of the canopy 22 slopes outward to provide additional space. The sides of the canopy 22 extend straight downward to limit the required space on the side of the vehicle 10. Further, the tent 20 comprises four tent poles 32. Two of the tent poles 32 are arranged at a rearward corner of the tent 20 on a side opposite the rear of the vehicle 10. Two other of the tent poles 32 are arranged essentially at a forward corner of the tent 20 adjacent the rear of the vehicle 10. Each tent pole 32 engages the tailgate 12 from below, the details of which will be described further below. The canopy 22 is fixed with its top, in particular its top corners, to the tent poles 32 and/or the tailgate 12. The tailgate 12 forms part of the structure of the tent 20 so that no crossbars are required at the top. The tent 20 is partially self-supporting with the tent poles 32. The tent poles 32 stand freely on the ground. The tent 20 does not require any ground fixation for deployment as intended, such as tent pegs. The tent 20 is free of such ground fixation means.

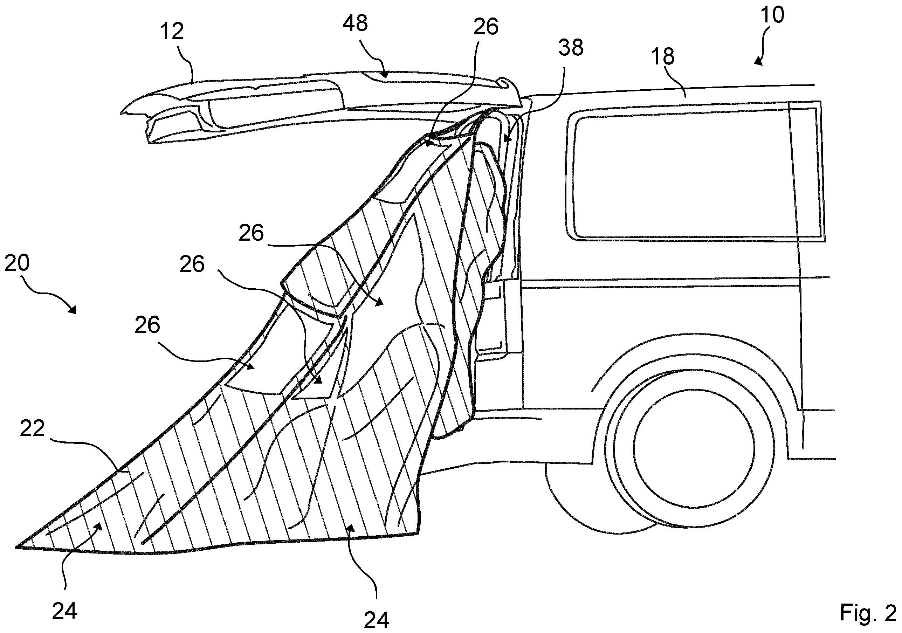

Fig. 2 shows how a top edge of the canopy 22 is fixed to the hinges 14, wherein the tent 20 is not in its deployed configuration. The tent comprises a fixation device 34, which is shown in greater detail in Fig. 5 and Fig. 6. The fixation device 34 comprises a strap 36 per hinge 14. The strap 36 is threaded through the hinge 14. At a side opposite the canopy 22, a bar is inserted in the strap 36 to prevent the strap 36 from slipping out of the hinge 14. The fixation device 34 is configured to allow adjusting the tailgate 12 into its closed state. The strap 36 will be sandwiched between a rear access opening seal and the tailgate 12 in its closed position. The canopy 22 may thus remain attached to the vehicle 10 and the tent 20 thus mounted to the vehicle 10 when the tent 20 is not used to provide a living space expansion and when the tailgate 12 is closed. The fixation device 34, in particular the strap 36, may be permanently fixed to the canopy, which may be very cost-effective and reliable. In another embodiment, the fixation device 34 is releasably attached to the canopy 22. For example, the strap 36 may be attached to the canopy 22 with a hook, buckle or snap-connection. The canopy 22 may thus be detached and therefore unmounted from the vehicle 10 without the need to detach the fixation device 34 from the hinges 14, for example to clean the canopy 22. The fixation device 34 may be configured to attach differently to the hinge 14 or even other parts of the vehicle 10. For example, the fixation device 34 may be configured with a strap 36 that loops around the hinge 14 for attachment.

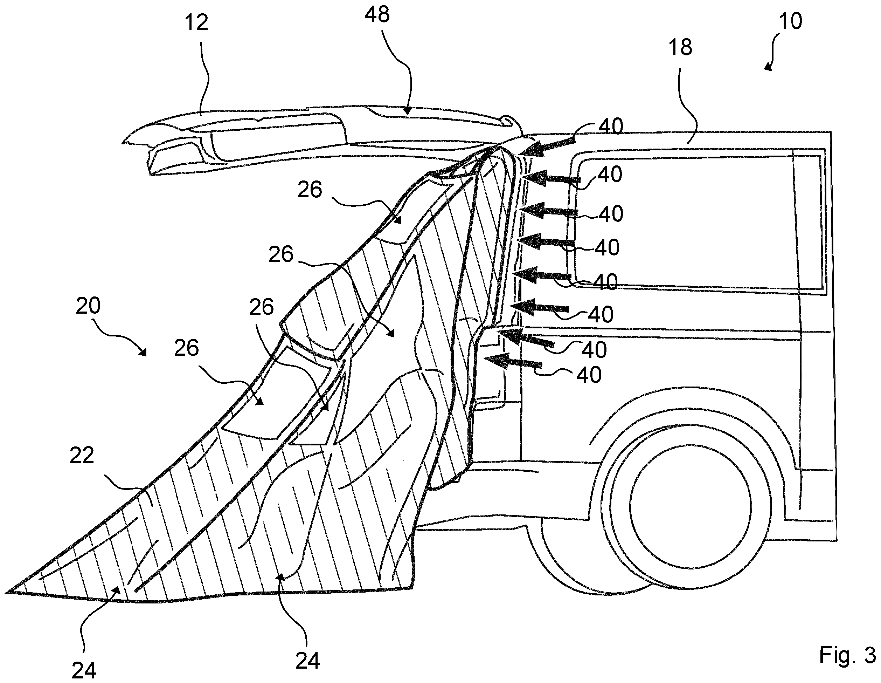

After a user has fixed the canopy 22 to the hinges 14 as shown in Fig. 2, the canopy 22 of the tent 20 is engaged to the bodywork 18 of the vehicle 10 around the rear access opening of the vehicle 10 closable by the tailgate 12. In the shown example, the canopy 22 comprises an elastic element sewn into the canopy 22 at the opening configured to be aligned with the rear access opening of the vehicle 10. The elastic element is engaged with a protruding edge 38 of the bodywork 18, which forms a seal around the rear access opening of the vehicle 10 that engages with the tailgate 12 for sealing in the closed position of the tailgate 12. The canopy 22 can thus reliably seal with the bodywork 18. Moreover, such an engagement ensures that no part of the canopy 22 blocks the rear access opening with the tent 20 in the deployed configuration. The engagement of the canopy 22 with the protruding edge 38 is illustrated with arrows 40 in Fig. 3.

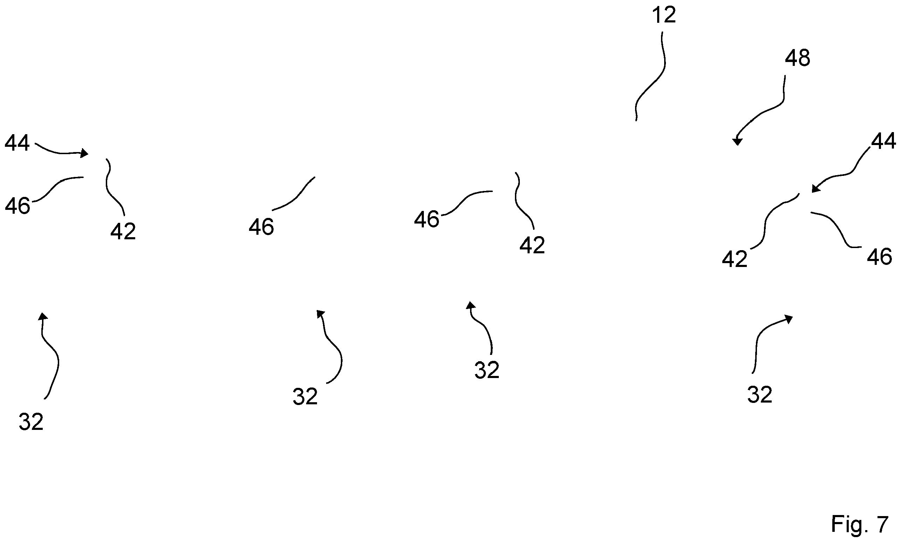

After or before engaging the protruding edge 38, the user may deploy the tent poles 32. The tent poles 32 are configured for telescopic length adjustment. At their top end, the tent poles 32 comprise an attachment element 42, which can be best seen in Fig. 7. The attachment elements 42 are configured to engage the tailgate 12 of the vehicle 10 when the tent is in the deployed configuration and the tent is mounted to the rear of the vehicle from below. A side of the attachment elements 42 engaged with the tailgate 12 is made from a compliant material. Further, an outside facing side of each attachment element 42 has a protruding lip 44 that prevents the tent pole from slipping inward.

The tent poles 32 are configured for length self-adjustment when the tent 22 is in the deployed configuration and mounted to the rear of the vehicle 10 to compensate vehicle suspension movement. For that purpose, each tent comprises a spring element 46 for length self-adjustment. The spring element 46 allows the attachment element 42 as a pole element to move relatively up and down to a bar element of the tent pole 32, moveably connecting the two. The tent poles 32 support the tailgate 12 from below, thus preventing unwanted adjustment of the tailgate 12 towards its closed position when the tent 20 is deployed and mounted to the vehicle 10.

No attachment and/or engagement of the tent 20 with a top side of the vehicle 10, in particular an outward facing side of the tailgate 12, is required for mounting and deploying the tent 20. This facilitates setting up the tent 20 and avoids scratching the paint of the vehicle 10. No part of the tent 20 extends beyond the tailgate 12 in the upward direction when deployed and mounted to the vehicle 10 with the tailgate 12 in its open position.

Fig. 4 shows the tent 20 adjusted into its storage configuration. In the storage configuration, the tent poles 32 are disengaged from the tailgate 12, unblocking adjustment into its closed position. The tent poles 32 may be held by the canopy 22 when the tent 20 is in the storage configuration or may be stored separately therefrom. As can be seen in Fig. 4, the canopy 22 may remain hanging from the hinges 14 in the storage configuration. However, in the storage configuration the tent 20, in particular the canopy 22, is not providing a tent interior living space. Instead, the canopy 22 is folded together so that the canopy 22 fits into the interior of the vehicle 10 while hanging from its top. For said purpose, the canopy 22 may, for example, comprise hooks and/or buttons that allow fixation of canopy sections to each other in the folded position and/or to the straps 36 of the fixation device 34.

While Fig. 4 shows the tailgate 12 in its open position, a user may now close the tailgate 12 and drive away with the vehicle 10 while the tent 20 remains mounted to the vehicle 10. When deploying the tent 20 the next time, the use does not need to attach the canopy 22 to the top of the vehicle 10. Instead, a user may simply only unfold the canopy 22 and erect the tent poles 32 for tent deployment. Deployment of the tent 20 is thus fast and easy.

Fig. 4 shows the canopy 22 folded in such a way that the section of the canopy 22 forming the floor 30 is facing outwardly, for example for ease of drying. The tent 20 is configured so that the user may instead fold the canopy 22 differently so that the canopy 22 forming the floor 30 is facing inward to prevent the floor 30 from contacting the interior of the vehicle. This may protect the interior of the vehicle from dirt and liquids adhering to the floor 30 after tent use.

In the transport configuration, one of the see-through sections 26 at least partially overlaps a rear window 48 of the vehicle 10 when the tent 20 is in the transport configuration and when the tent 20 is mounted to the rear of the vehicle 10 so that a driver has rear vision through the rear window 48 of the vehicle 10. Alternatively or additionally, the canopy may be folded sideways to unblock at least a section of the rear window 48. Such folding may also partially unblock the rear access opening at one side, allowing a user access to the vehicle interior from the rear. For said purpose, the canopy may be detached from one of the straps 36 and attached folded together sideways at the top with two sections to the same strap 36. Alternatively or additionally, the fixation device 34 may be configured to hoist the canopy 22 upward, for example by hooking the canopy 22 higher or shortening the straps 36. The user may thus change the vertical position and/or height of the canopy 22 hanging in the rear access opening, for example unblocking a bottom portion of the rear access opening to allow insertion of cargo at the bottom.

## Claims

1. Tent (20) configured to be mounted to a rear of a vehicle (10), such as a van, truck or station wagon,
the vehicle (10) having a tailgate (12) hingedly connected to a top of the vehicle (10),
wherein the tailgate (12) is adjustable between an open position unblocking a rear access opening to a vehicle (10) interior space and a closed position,
wherein the tent (20) comprises a canopy (22) and wherein the tent (20) is adjustable into a deployed configuration in which the canopy (22) provides a tent (20) interior living space,
wherein the tent (20) interior space is connected to the vehicle (10) interior space when the tent (20) is in the deployed configuration, the tailgate (12) is in the open position and the tent (20) is mounted to the rear of the vehicle (10).

2. Tent (20) according to claim 1,
wherein the tent (20), in particular the whole canopy (22), is arranged underneath the tailgate (12) when the tent (20) is in the deployed configuration, the tailgate (12) is in the open position and the tent (20) is mounted to the rear of the vehicle (10)
and/or
wherein all fixation means of the tent (20) are arranged below a top of the vehicle (10).

3. Tent (20) according to any one of the preceding claims,
wherein the tent (20) comprises at least one tent pole (32), in particular two poles (32) arranged at corners of the tent (20) at a side adjacent the rear of the vehicle (10) and/or two poles (32) arranged at corners of the tent (20) at a side opposite the rear of the vehicle (10) when the tent (20) is in the deployed configuration and mounted to the rear of the vehicle (10).

4. Tent (20) according to claim 3,
wherein the at least one tent pole (32) is configured to support the tailgate (12) in its open position when the tent (20) is in the deployed configuration and mounted to the rear of the vehicle (10),
in particular wherein the at least one tent pole (32) is configured to engage the tailgate (12), in particular from underneath, when the tent (20) is in the deployed configuration and mounted to the rear of the vehicle (10).

5. Tent (20) according to claim 4,
wherein the at least one tent pole (32) is configured for a length adjustment, in particular wherein the at least one tent pole (32) is configured for length self-adjustment when the tent (20) is in the deployed configuration and mounted to the rear of the vehicle (10) to compensate vehicle suspension movement.

6. Tent (20) according to any one of the previous claims,
wherein the tent (20) comprises at least one attachment element (42) configured to engage the tailgate (12) of the vehicle (10) when the tent (20) is in the deployed configuration and the tent (20) is mounted to the rear of the vehicle (10).
in particular wherein the at least one attachment element (42) engages the tailgate (12) from below when the tent (20) is in the deployed configuration and the tent (20) is mounted to the rear of the vehicle (10)
and/or
in particular wherein the at least one attachment element (42) is free of an engagement with a top side of the tailgate (12) when the tent (20) is in the deployed configuration and the tent (20) is mounted to the rear of the vehicle (10), in particular that the tent (20) is free of any attachment elements (42) configured for an engagement with a top side of the tailgate (12) when the tent (20) is in the deployed configuration and the tent (20) is mounted to the rear of the vehicle (10).

7. Tent (20) according to any one of the previous claims,
wherein the tent (20) is configured for fixation to the top of the vehicle (10), in particular to hinges (14) of the tailgate (12) and/or load securing anchor elements at the top of the vehicle (10),
in particular wherein the tent (20) comprises a fixation device (34) for attaching the tent (20) to a hinge (14) of the tailgate (12) and/or the load securing anchor element.

8. Tent (20) according to claim 7,
wherein the fixation device (34) is configured to keep the tent (40) attached to the hinge (14) of the tailgate (12) and/or the load securing anchor element when the tailgate (12) is in its closed position
and/or
wherein the canopy (22) and/or the at least one tent pole (32) is detachable from the fixation device (34), wherein the fixation device (34) may remain attached to the vehicle (10) when the canopy (22) is detached.

9. Tent (20) according to any one of the previous claims,
wherein the tent (20) is adjustable into a transport configuration in which the canopy (22) provides no tent interior living space and
wherein the tent (20) is configured to remain mounted to the vehicle (10) in the transport configuration.

10. Tent (20) according to claim 9,
wherein the tent canopy (22) hangs at the rear of the vehicle (10) in the vehicle interior when the tent (20) is in the transport configuration and when the tent (20) is mounted to the rear of the vehicle (10)
and/or
wherein the tent (20) is configured, when in the transport configuration and when mounted to the vehicle (10), to allow adjustment of the tailgate (12) into its closed position.

11. Tent (20) according to claim 10,
wherein the tent canopy (22) comprises a see-through section (26) that at least partially overlaps a rear window (48) of the vehicle (10) when the tent (20) is in the transport configuration and when the tent (20) is mounted to the rear of the vehicle (10) so that a driver has vision through the rear window (48) of the vehicle (10), in particular wherein the see-through section (26) is formed by a transparent section and/or net section of the canopy (22)
and/or
wherein the tent (20) is configured to unblock section that at least partially overlaps a rear window (48) of the vehicle (10) when the tent (20) is in the transport configuration and when the tent (20) is mounted to the rear of the vehicle (10) so that a driver has vision through the rear window (48) of the vehicle (10),
in particular wherein the canopy (22) is detached from the fixation device (34) and/or by folding a canopy (22) section out of the way.

12. Tent (20) according to any one of the previous claims 9 to 11,
wherein the tent (20) is configured for adjustment into one of the following transport configurations, in particular configured for selective adjustment into one of the following transport configurations:
- A first transport configuration in which a side of the canopy (22) contacting the ground in the deployed configuration, such as an underside of a floor (30) section of the canopy (22), is facing outward;
- A second transport configuration in which the side of the canopy (22) contacting the ground in the deployed configuration is facing inward;
- A third transport configuration in which the canopy essentially blocks the rear access opening of the vehicle (10) closable by the tailgate (10); and
- A fourth transport configuration in which the rear access opening of the vehicle (10) closable by the tailgate (12) is at least partially unblocked by the canopy (22).

13. Tent (20) according to any one of the previous claims,
Wherein the tent (20), in particular the canopy (22) of the tent (20), is configured for fixation to the bodywork (18) of the vehicle (10), in particular a protruding edge (38), around the rear access opening of the vehicle (10) closable by the tailgate (12).

14. Tent (20) according to claim 13,
wherein the tent (20) comprises an elastic element, such as an elastic rope, configured to engage the canopy (22) to the bodywork (18) of the vehicle (10) around the rear access opening of the vehicle (10) closable by the tailgate (12).

15. Method of using the tent according to any one of the previous claims,
the method comprising at least the following steps:
- Fixing the tent (20) to the top of the vehicle (10), in particular to the hinges (14) of the tailgate (12); and
- Adjusting the tailgate (12) into its closed position while the tent (20) remains attached to the hinges (14) of the tailgate (12).
